# EUROPEAN PATENT SPECIFICATION

(11) **EP 1 142 425 B1**
(45) Date of publication and mention of the grant of the patent: **20.04.2011**
(21) Application number: 99968399.8
(22) Date of filing: 26.12.1999
(51) Int. Cl.: H04W 64/00

(54) **TELECOMMUNICATION SYSTEM AND METHOD WITH LOCATION CRITERIA IN CALL REQUESTS**
TELEKOMMUNIKATIONSSYSTEM UND VERFAHREN MIT STANDORTKRITERIEN IN ANRUFANFRAGEN
SYSTEME ET PROCEDE DE TELECOMMUNICATION AVEC CRITERE DE LOCALISATION DANS LES DEMANDES D'APPEL

(30) Priority: 30.12.1998 GB 9828827
(43) Date of publication of application: 10.10.2001
(73) Proprietor: Nokia Corporation, 02150 Espoo (FI)
(72) Inventor: KANERVA, Mikko, FIN-00410 Helsinki (FI)
(74) Representative: Swindell & Pearson Limited
(86) International application number: PCT/EP1999/010473
(87) International publication number: WO 2000/041424

(56) References cited:
- EP-A- 0 810 803

## Description

### Field of the Invention

The present invention relates to a telecommunication system and method. The system can be a wireless cellular telecommunications system or a wired network.

### Background to the Invention

In known wireless cellular telecommunications networks, the area covered by the network is divided into a number of cells which may overlap. A number of base transceiver stations are provided, each of which is associated with a cell or one or more cell sectors. Each base transceiver station will thus be able to communicate with terminals located in the associated cell. These terminals may be fixed terminals or mobile stations. Each mobile station will be able to move between the cells and will therefore communicate with different base transceiver stations depending on the location of the mobile station. In some systems, a terminal may communicate with more than one base station at the same time.

It has been proposed to introduce mobile access hunting (MAH) into the GSM (Global System for Mobile communications) standard for wireless cellular networks. MAH allows an incoming call to be connected to any one of a group of users. This would be useful for those companies who provide services to their customers where the employees are usually in the field and it is unimportant as to which particular employee is contacted. Such companies may include those providing taxi services, repair services or the like.

The company will have one or more common numbers for incoming calls from customers. Each one of the group members will have a mobile station with an individual number. The incoming calls will be routed to an available number out of the individual numbers of the group members. Once a mobile access has been selected, normal call set up procedures apply and the mobile access hunting procedures are considered completed. The order in which the individual members of the group are contacted will be specified by the company having the group number. Thus if the first specified number is unavailable, the next number will be tried and so on.

Universal access numbers (UAN) have also been proposed to be included in the GSM standard. UAN are similar in concept to MAH. However, there is a fixed number or UAN for a given category of people, such as doctors. Thus when the UAN is dialled, a connection will be made with a doctor available via the UAN number. As with MAH, there will be a hierarchy in the group of doctors contactable via the UAN. As with MAH, if the first individual in the hierarchy is unavailable, then the next individual specified in the hierarchy will be contacted and so on. Each doctor contactable via the UAN will have his own individual number.

However, both of these proposals suffer from the same problem. In particular, the caller, whether a customer or patient, will not be connected to the most appropriate employee or doctor. Accordingly the time taken for the particular employee or doctor to reach the caller may be unnecessarily increased.

EP-A-0810803 discloses a communication system in which location information for second stations is displayed to a user of a first station and the user of the first station selects which one of the second stations is to be connected by touching an icon on the display screen.

It is therefore an aim of embodiments of the present invention to avoid or at least reduce the problems of the known proposals.

### Summary of the Invention

The present invention is defined in the independent claims.

Thus a first station is able to contact a second station at a defined location without necessarily knowing the individual identity of the second station. In some embodiments, a first station may be arranged to be connected to more than one second station at the same time, for example for a conference call.

The location criteria can be the closest second station to the first station or can be defined in terms of a direction, call cost and/or distance from the first station. Alternatively the location criteria can be an absolute location. The distance may be defined as the direct distance from the first station or the road or the like distance. The road or the like distance may be larger than the direct distance. The distance may alternatively be defined in terms of time taken to travel from the second user to the first user. The location criteria may be the closest or any appropriate user in the same cell or cell sector as the first user. The location criteria can alternatively specify at least one cell or cell sector which may or may not include the cell in which the user is currently located.

At least one register is provided for storing location information of at least some of said second stations and/or said first station. The at least one register can be provided at any suitable location: in the first station; in the second station, in a network element such as a base station; a base station controller; or a mobile services switching centre. Alternatively, the at least one register may be separate from the elements described hereinbefore but accessible thereby. Where more than one register is provided, the registers may be at the same or different locations. If more than one register is provided, different users can be associated with different registers. A user may be associated with more than one register. In this latter case, the same, different or overlapping information can be stored for each user in a plurality of registers. The information stored in the at least one register may include information other than location information.

As an alternative or additionally at least one register, at least one processor may be provided. The at least one processor may be arranged to calculate and/or obtain location information. This may be done in real time.

The first station may attempt to initiate a connection with any second station satisfying the location criteria. Alternatively, the first station is arranged to initiate a connection with a second station satisfying the location criteria and falling in a predetermined group of second stations.

A predefined location criteria may be associated with the predetermined group. For example, when an emergency number is dialled, the closest available second station is contacted.

The predetermined group may have a predetermined identifier associated therewith. This may be similar to the universal access number or the mobile access hunting number. The predetermined group may be preset. Alternatively, the predetermined group may be defined by the user of the first station.

Preferably, means are provided for determining which stations satisfy the location criteria. Information as to which second stations satisfy the location criteria may be sent to the first station. The first station may comprise means for selecting one or more of said second stations based on said information. Alternatively, the determining means may be arranged to define an order in which connections to second stations satisfying the location criteria are to be attempted. The determining means may be arranged to attempt connections to second stations satisfying the location criteria randomly.

Preferably, at least one of said second stations is arranged to be able to prevent a connection with the first station if the first station has made a connection request based on the location of the at least one second station. The second user may be arranged to accept calls based on location only from certain other users or may not accept calls based on location from certain other users. The second station may block calls in such circumstances or may not be included in the search presented to the first station. The second user may not be included in the search or presented to the first user if for example the second user is busy. It is preferred that the second stations be able to change their status so that sometimes a second station will be able to receive calls, based on location, and at other times the connection is prevented.

A second station satisfying the location criteria may receive a message indicating that a first station wishes to make contact therewith. The second station receiving said message may be arranged to indicate if the call to be accepted or if the second user can be listed or presented to the first user.

Preferably said connection request also comprises information identifying at least one second station and a call is made between said first and the identified at least one station only if the location criteria is satisfied. Preferably if the second does not satisfy the location criteria at the time the connection request is made, the system is arranged to make the call at a subsequent time when the second station satisfies the location criteria.

The first station and/or at least one of said second stations may be a mobile terminal. The first station and/or at least one of said second stations may be a fixed terminal. Thus some of the stations may fixed whilst others may be mobile. The stations may be part of the same network or may be from separate networks. The networks may be wireless or wired networks.

### Brief Description of the Drawings

For a better understanding of the present invention and as to how the same may be carried into effect, reference will now be made by way of example to the accompanying drawings in which:
Figure 1 shows schematically a cellular telecommunication network in which embodiments of the present invention can be implemented ;
Figure 2 shows part of the hierarchy of the network shown in Figure 1.

### Detailed Description of Preferred Embodiments of the Invention

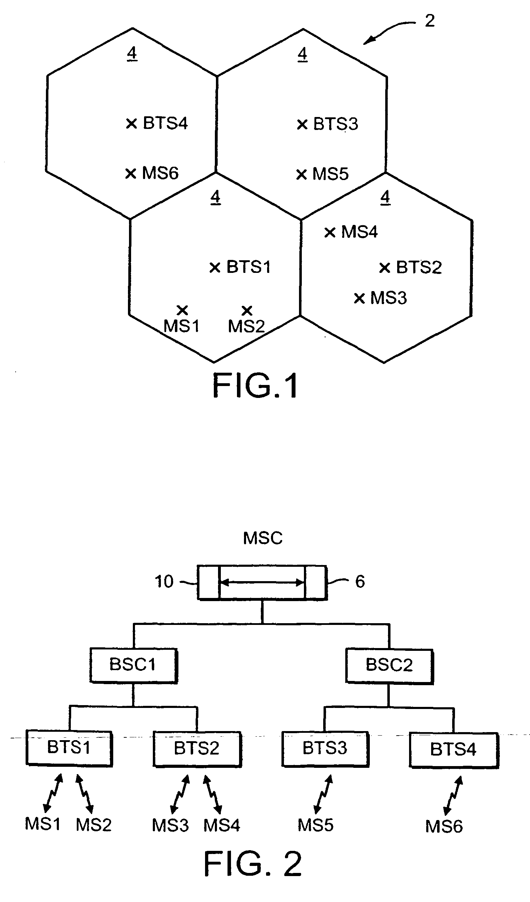

Reference will first be made to Figure 1 which shows a wireless cellular telecommunications network 2 in which embodiments of the present invention can be implemented. The area covered by the network 2 is divided into a number of cells 4, only four of which are shown in Figure 1. It should be appreciated that in practice, many more than four cells will be provided. Each cell 4 is shown as having a generally hexagonal shape which allows the area covered by the network conveniently to be divided up. However, the cells can have any other suitable shape and configuration. In practice, the cells may overlap.

Each cell 4 has a base transceiver station BTS1-4 which communicates with the mobile terminals MS1-6 located in the cell 4 served by the respective base transceiver station. Thus the first and second mobile stations MS1 and MS2 communicate with the first base transceiver station BTS1, the third and fourth mobile stations MS3 and MS4 communicate with the second base transceiver station BTS2, the fifth mobile station MS5 communicates with the third base transceiver station BTS3 and the sixth mobile station MS6 with the fourth base transceiver station BTS4. In practice each cell will include many more than one or two mobile stations. However in the interests of clarity, each cell 4 is shown with only one or two mobile stations.

In practice, one mobile station may be in communication with more than one base station at the same time, in for example, a soft handoff situation in a code division multiple access system. Where cells overlap, a mobile station may be in more than one cell at the same time. One mobile station may in certain embodiments be connected to more than one network at the same time. The networks may conform to the same or different standards. For example a mobile station may be arranged to be in communication with a GSM and a CDMA network at the same time. The two different networks may be overlain.

Reference is now made to Figure 2. As can be seen from this Figure, each of the base transceiver stations BTS1-4 is connected to a mobile services switching centre MSC which controls the connections in the network via a respective base station controller BSC1 and BSC2. The first and second base stations BTS1 and BTS2 are connected to the first base station controller BSC1 whilst the third and fourth base stations BTS3 and BTS4 are connected to the second base station controller BSC2. The first and second base station controllers BSC1 and BSC2 are connected to the mobile services switching center.

In practice, a plurality of mobile services switching centres MSC are provided each of which is connected to a number of base station controllers. In practice, each base station controller is connected to more than two base transceiver stations. Usually, each mobile services switching centre MSC will be connected to more than two base station controllers.

Each mobile services switching centre MSC is provided with a location register 6. This location register 6 stores information as to the location of mobile stations in the network. This location information includes the cell or group of cells in which a given mobile station is located. The group of cells is sometimes referred to as the location area. Additionally or alternatively the position of the mobile station within the cell is also stored. The mobile services switching centre MSC also has a processor 10 which is able to retrieve information from the location register 6.

Additionally or alternatively the location register 6 can store the absolute geographic location of the mobile phones.

The register 6 can be replaced by an external register accessible by the mobile services switching center. An external processor may be used for accessing the register, regardless of whether the register is part of the mobile services switching center or external thereto.

The register can be a single register or a plurality of registers. Different information may be stored in different registers. For example the cell or cell group information may be stored in one register with the geographic location stored in another register.

It is a legal requirement of some countries such as the USA that the location of a mobile station be known. This is so that when an emergency call is made from the mobile station, the appropriate emergency service can be sent to the location of the caller, even if the caller does not himself know his location. Accordingly a number of standards which have been proposed include the requirement that the location of the mobile station be identified. A number of techniques are known which allow the location of the mobile station to be determined. One such technique is that each mobile station incorporates a GPS (global positioning system) receiver. The GPS system relies on a network of satellites which orbit the earth. At any position on earth it is in theory possible for a GPS receiver to receive the signal from a number of satellites. Using the principle of triangulation, it is possible for the GPS receiver to determine the location of the mobile station. It should be appreciated that any other suitable location determining technique can alternatively be used in embodiments of the present invention.

The cell 4 or cells in which a given mobile station is located is identified by determining with which base transceiver station(s) the mobile station is associated. This information is passed to the mobile services switching centre MSC or to a register. This information is stored in the location register 6 or other register(s) as discussed hereinbefore. The position of the given mobile station, obtained using the hereinbefore described technique or any other suitable location technique, is passed to the mobile services switching centre MSC via the base transceiver station(s) associated with the cell(s) in which the mobile station is located.

As discussed hereinbefore, in some embodiments of the present invention only the cell or cells in which the mobile is located or only the location of the mobile station is stored in the location register. It is possible in alternative embodiments which store both the location of the mobile and the cell or cells in which the mobile is located that this information can be stored in the same or different registers.

The register(s) may be internal or external to: the first mobile station, the second mobile station, the base transceiver station, the base station controller, the mobile services switching center; and/or any other suitable network element. Different networks may have separate registers.

Where more than one register is provided, different users may be associated with different registers. One user may be associated with more than one register. The same different or partially overlapping information relating to a given user can be stored in the plurality of registers. The information can include information other than location information such as the capabilities of a user, his tariff details etc. Where more than one register is provide, the registers may be located in different places and/or be associated with different types of network elements.

In one modification to the embodiment described hereinbefore, the location register is not located in a mobile services switching centre MSC but is instead in a separate location service centre. This location service centre may be connected to receive information from all of the mobile services switching centres or other network elements in existing networks.

In a first example, a walker gets lost or injured in some woods. The walker therefore wishes to contact the closest person with a mobile station to ask for assistance. The walker will switch on his mobile station. The location of the mobile station and hence the walker will be determined as discussed hereinbefore and stored in the location register 6 of the mobile services switching centre MSC. In this example it is assumed that the walker has the first mobile station MS1. The walker will then input, via a keypad of the mobile station, a request that a connection be made with the nearest available mobile station, i.e. the second mobile station MS2.

The request that a connection be made with the nearest available mobile station can be input to the mobile station MS1 in a number of different ways. Firstly, there may be a number which should be dialled or another combination of one or more keys which should be actuated if the caller wishes to be connected to the nearest available mobile station. Secondly, the first mobile station MS1 may have a menu of various different options one of which requests a connection with the nearest mobile station when selected. Thirdly the first mobile station MS1 could have a mode in which the party to be called is identified by their location. This mode can be accessed by actuating one or more keys or by selecting this option from a menu. Once this mode has been selected, the caller can identify the desired location of the party to be called.

The location of the party to be called need not be the closest location to the calling party. For example the called party could be defined in terms of call cost, direction and/or distance from the caller. The distance may be the direct distance, the distance by road or the like or defined in terms of travelling time. The caller may wish to limit the called parties to those which are using the same network or may include different networks. The user may define at least one cell or cell sector as the location of the called party. The at least one cell or cell sector may or may not include the cell in which the user is currently located. The networks may be wired or wireless networks as will be discussed hereinafter. Alternatively the mobile station may have a map stored therein and the user is able to select any location on this map as the location of a mobile station with which the caller wishes to make contact.

For certain types of call, the area may be predefined. For example, for emergency calls the caller will automatically be connected to the closest available party.

The connection request is transmitted from the first mobile station MS1 to the first base transceiver station BTS1. This request is forwarded to the processor 10 of the mobile services switching centre MSC via the base station controller BSC1. The mobile services switching center retrieves from the location register 6 the location of the first mobile station MS1 making the request. The processor 10 then searches through the location register 6 for a mobile station having the requested criteria, that is the second mobile station MS2 if the closest mobile station is required or the mobile station which is in the selected location. If a connection with the closest mobile station is required, an attempt to initiate a call between the first and second mobile stations MS1 and MS2 is carried out in the normal way.

In the interests of privacy, any mobile station will be able to prevent the receipt of calls which rely on the location of the called party. This can be achieved in that information that the mobile station does not wish to receive calls based on location is transmitted by the mobile station to the base transceiver station with which it is in communication. This information is passed onto the mobile services switching centre MSC. It is possible for a user to define those parties from whom he is prepared to receive calls based on location or those parties from whom he is not prepared to receive calls based on location.

For those mobile stations which do not wish to receive calls based on their location, the entry for the given mobile station can be removed either permanently or temporarily from the location register. In this way, the mobile station will not be selected as a mobile station which satisfies a location criteria defined by a third party caller.

Alternatively, the location register may include an entry for each mobile station as to whether or not the user thereof is prepared to receive calls based on the location of the mobile station. As will be apparent, the user of a mobile station can change the status of the mobile station as desired. Thus sometimes the user may be prepared to receive calls based on the location of his mobile station and other times the user may not be prepared to receive such calls. The user may change a set of users from which he is willing and/or is not willing to receive calls based on the location thereof.

In a second example, a user wishes to see if any of his family is at a given location such as at a restaurant or at the user's home. The user will define the location of the restaurant or his home as outlined in the first example and will initiate a call based on this location.

A third example of an embodiment of the invention will now be described. In this case, the user of a mobile terminal wishes to communicate with the closest available doctor to his current location. The user initiates a call, inputting a code or identifier associated with a group of doctors. This code may be a number or the like. This may be the same or similar in concept to mobile access hunting number or the universal access number. Alternatively, the user will enter an indication as to the subset of people with which the user wishes to make contact. In some embodiments of the invention, some groups of people will be identified by a group identifier and other groups of people will be identified by the subset indication or by a list. The subset or list may be defined by the user or may be predefined. A subset or list may be defined by the user before or when a connection is initiated or requested. The subset or list are preferably changeable as required. This can be carried out by the user, by users wishing to be added to or removed from the list or carried out by a system controller. Information on the defined subset or list will be forwarded to the network using any suitable signalling method. For example, general packet radio system (GPRS) or dedicated signalling can be used.

Additionally, the user inputs an indication that the closest doctor is required or that a doctor satisfying a given location criteria is required. Alternatively it may be automatically assumed that the closest doctor is required. The mobile services switching centre MSC will on receipt of the signals from the mobile station check which of the group of doctors are available and also determine their location from the information stored in the location register 6. The processor 10 will determine, based on the current position of the mobile station initiating the call and the information retrieved from the register 6, which available mobile station belonging to the group of doctors is closest to the user initiating the call or satisfies the location criteria. Any doctor belonging to the group of doctors is able to select a mode in which that mobile is omitted from consideration when determining the closest mobile station. This facility can be used for example when the doctor is off duty or attending to another call.

Any suitable group of people may share a group identifier or be part of a subset such as plumbers, taxis, employees of the same company (for internal communication purposes), restaurants, family members, the police, users of the same network and the like.

Instead of initiating a call with a party who satisfies the required criteria, for certain types of group numbers, all or a given number of those parties satisfying the specified location are identified by the processor 10 and information as to these parties is sent back to the mobile station initiating the call. This information may include one or more of the following: the name of the party, their location, their phone number, and their operator (that is to which mobile or fixed network the party belongs). This information or part thereof is displayed on the display of the mobile initiating the call. If there is no display, then the information may be delivered to the user audibly. The user may then select one of the parties which is displayed. This will cause a connection to be initiated with the selected party. This may, but not necessarily, require a new connection to be initiated by the user. Alternatively, selection of a party may automatically result in a call to that party being initiated.

In the embodiment described hereinbefore, an attempt is made to connect the user to one party at a time. However, the network may attempt to connect the user to more than one party at the same time. In other words, the phones of a number of parties would be called or paged. However once the phone had been answered or a paging attempt had been successful, the attempts to initiate connections or page other parties would cease. In another embodiment, the network would attempt to initiate a connection with a first phone satisfying the required criteria. If that connection fails within a predetermined time, then an attempt is made to initiate a connection with another phone satisfying the required criteria. The processor 10 may prepare a candidate list of mobile phones which includes information as to the order in which connections with the mobile phones is to be attempted. The order may be determined by how well the phones satisfy the criteria. For example, if a call is to be initiated with the closest available person, then the first phone on the list may be the closest phone and the next phone may be the second closest phone and so on. The users may alternatively be weighted and the order of selection is based on the weights. Alternatively, the connections with the phones on the candidate list may be attempted at random.

In some embodiments, whilst a connection is being attempted, the search may continue to search for a second user which fits the criteria. Other users may be paged or contacted whilst a connection attempt is being made.

It is possible to initiate a call with a number of users at the same time, for example for conference calls. One or more of those users may be selected on the basis of their location.

In one modification to embodiments of the present invention, information as to the location of the phones will not be automatically stored in a register but will only be obtained when required. This applies particularly to those embodiments which use group numbers or the like. The location of the user can be obtained as outlined hereinbefore or can be provided by the user in response to a query from the network.

In the embodiment described hereinbefore, all of the terminals in the cells are described as being mobile stations. However, it should be appreciated that at least some, and possibly all of these terminals could be fixed terminals. These fixed terminals may be arranged to communicate with the base transceiver station of the cell in which the fixed terminal is located using wireless communication. Alternatively, the fixed terminals may be connected to a dedicated wired private branch exchange PBX or the like.

The cell location stored in the location register may be in the form of the identity of the cell itself or may be in the identity of the base transceiver station which is in communication with the given mobile station.

The location register of the mobile services switching centre may just store the cell, cell group or cells in which the mobile station is located without information as to the location of the mobile station within the cell. This may be particularly applicable in urban environments when each cell is quite small. Thus, it may be sufficient if a caller is able to contact a doctor who is the same cell as the caller. The contacted doctor may not be the closest doctor but this may be unimportant if the cell size is only a few hundred metres.

As mentioned hereinbefore, a user can take steps to ensure that he does not receive calls based on his location. The user can block all or only some types of calls based on location. For example, the user may agree to be included in some subsets or groups and not others. This blocking may be permanent or temporary depending on for example whether or not the user is on duty. The blocking can result in the station not being included in a search or not being presented to the user making the call request. The user chose to accept calls only from certain users based on location or may choose not to receive calls from certain users based on location. Alternatively, a user which satisfies a given criteria is asked by the network is he is prepared to receive such a call based on the outlined criteria or if that user can be added to the list of candidate phones or presented to the user initiating the call. The network may advise the user of the identity of the calling party, the request made by the calling party and/or any other suitable message in order to assist the user in deciding if he is prepared to receive a call based on a location criteria. The identity of the calling mobile station can be included in any message sent by the mobile station or may be inserted by the network. Messages to be sent to the parties to see if they are prepared to accept calls may be formulated by the calling party and forwarded by the network. Alternatively, a suitable message may be formulated by the network.

In one embodiment of the present invention, the user may define the identifier of the second user with which a connection is desired. However, the first user may also define a location criteria for that second user. Accordingly, a call will only be initiated between the first and second user if the second user is in the defined location. In one modification to this, the location of the second user is monitored and when the second user is in the defined location, a call may be automatically initiated or offered between the first and second users. For example, the first user may only wish to talk to the second user if the second user is in his office. There may be a delay between a call connection being requested and a call being initiated so that the second user is only contacted when the user is in the specified location. This delay can be of the order of minute, hours or longer.

Alternatively or additionally, at least one processor may be provided for providing location information. This may take place in real time. The at least one processor may obtain and/or calculate location information for mobile stations. A mixture of at least one processor and at least one register may be provided.

In embodiments of the present invention, location information from a mobile station may alternatively be passed to a base station, a base station controller, a processor(s) as discussed hereinbefore or any other suitable element.

The embodiments described hereinbefore have been in the context of a wireless cellular network. However, embodiments of the present invention are also applicable to any other type of wireless communication as well as fixed line networks such as the conventional public service telephone network (PSTN). As with the embodiments described hereinbefore, a register is provided in which the location of the users are stored. Since the users do not move, there is no need to update the register, unless for example external parameters necessitate reconfiguration. The external parameters may include network configuration or any other such parameter. In the same way as described hereinbefore, a user is able to make a call to any other user by defining the required location and if necessary the group identifier or subset.

Embodiments of the invention can be used in a system including both wireless and wired networks. In this case, the processor will look for any phone, be it a fixed phone or a mobile phone, which meets the required location criteria. A central register may be provided which stores information as to the location of both the fixed and the mobile phones. Alternatively, separate registers may be provided for the fixed and the mobile phones. Each of the registers would need to be checked by the processor which can be provided in any suitable location. Embodiments of the invention which have group numbers may include fixed and mobile phones in the same group.

Embodiments of the present invention can be implemented with any known standard such as the GSM standard, the DCS 1800 standard as well as any other digital standard or any of the known analogue systems. Embodiments of the invention can be used with any access method such as time division multiple access (TDMA), frequency division multiple access (FDMA), space division multiple access (SDMA), spread spectrum access techniques such as code division multiple access (CDMA) or hybrids of any of the above techniques.

The network configuration shown in Figure 2 is only one example. The network can take any suitable configuration. For example one or more of the base station, base station controller and mobile services switching centre may.be provided together.

The each register or processor may be arranged to store information other than the location of user. For example the capabilities of the mobile station may be stored.

## Claims

1. A communications network element (MSC) for connecting a first station (MS1) and at least one of a plurality of second stations (MS2) based on a connection request from the first station (MS1), said connection request comprising a location criteria to be satisfied by at least one second station (MS2) and information identifying at least one second station (MS2);
said communications network element (MSC) arranged to be accessible to a store (6) arranged to store location information for at least some of said second stations (MS2) ;
said communications network element comprising a selection means arranged to select at least one of the second stations (MS2) for connection based upon the location information stored in the store (6); and
said communications network element further arranged to establish a call between said first station (MS1) and the identified at least one second station (MS2) only if the location criteria is satisfied, and wherein if the second station (MS2) does not satisfy the location criteria at the time the connection request is made, the communications network element is arranged to establish a connection at a subsequent time when the second station (MS2) satisfies the location criteria.

2. A communications network element (MSC) according to claim 1, wherein at least one processor (10) is provided for providing location information for at least some of said second stations (MS2) and/or said first station (MS1).

3. A communications network element (MSC) according to claim 2, wherein the processor (10) is adapted to search the store (6) for at least one second station (MS2) having the requested location criteria.

4. A communications network element (MSC) according to any one of claims 1 to 3, wherein the communications network element is any of: a mobile services switching centre, a base station, or a base station controller.

5. A communications network element as claimed in any preceding claim, wherein means are provided for determining which second stations (MS2) satisfy the location criteria.

6. A communications network element as claimed in claim 5, wherein means are provided for sending information as to which second stations (MS2) satisfy the location criteria to the first station (MS1).

7. A communications network element as claimed in claim 5, wherein the first station (MS1) comprises means for selecting said at least one of said second stations (MS2) based on said information.

8. A communications network element as claimed in claim 5, wherein the determining means is arranged to define an order in which connections to second stations (MS2) satisfying the location criteria are to be attempted.

9. A communications network element as claimed in claim 5, wherein the determining means is arranged to attempt connections to second stations (MS2) satisfying the location criteria randomly.

10. A method for connecting a first station (MS1) and at least one of a plurality of second stations (MS2) based on a connection request from the first station (MS1), said connection request comprising a location criteria to be satisfied by at least one second station (MS2) and information identifying at least one second station (MS2), the method comprising:
receiving said connection request; determining which of said second stations (MS2) satisfy said location criteria by selecting at least one of the second stations (MS2) for connection based upon location information for at least some of said second stations (MS2) stored in a store (6);
establishing a connection between the first station (MS1) and the indentified at least one second station (MS2) only if the location criteria is satisfied, and wherein if the second station (MS2) does not satisfy the location criteria at the time the connection request is made, arranging to establish the second connection at a subsequent time when the second station (MS2) satisfies the location criteria.

11. A method according to claim 10, further comprising requesting a connection with at least one second station (MS2) satisfying said criteria; and establishing a connection between said first station (MS1) and said at least one second station (MS2) satisfying said location criteria.

## Patentansprüche

1. Element (MSC) eines Kommunikationsnetzwerks zum Verbinden einer ersten Station (MS1) und mindestens einer von mehreren zweiten Stationen (MS2) basierend auf einer Verbindungsanforderung von der ersten Station (MS1), wobei die Verbindungsanforderung ein Ortskriterium, das von mindestens einer zweiten Station (MS2) erfüllt werden muss, und Informationen umfasst, die mindestens eine zweite Station (MS2) identifizieren;
wobei das Element (MSC) des Kommunikationsnetzwerks eingerichtet ist, um auf einen Speicher (6) zugreifen zu können, der eingerichtet ist, Ortsinformationen für mindestens einige der zweiten Stationen (MS2) zu speichern;
wobei das Element des Kommunikationsnetzwerks ein Auswahlmittel umfasst, das eingerichtet ist, um basierend auf den Ortsinformationen, die in dem Speicher (6) gespeichert sind, mindestens eine der zweiten Stationen (MS2) für eine Verbindung auszuwählen; und
wobei das Element des Kommunikationsnetzwerks weiter eingerichtet ist, einen Anruf zwischen der ersten Station (MS1) und der identifizierten mindestens einen zweiten Station (MS2) nur aufzubauen, falls das Ortskriterium erfüllt ist, und wobei, falls die zweite Station (MS2) das Ortskriterium zum Zeitpunkt des Ausführens der Verbindungsanforderung nicht erfüllt, das Element des Kommunikationsnetzwerks eingerichtet ist, eine Verbindung zu einem nachfolgendem Zeitpunkt aufzubauen, wenn die zweite Station (MS2) das Ortskriterium erfüllt.

2. Element eines Kommunikationsnetzwerks (MSC) nach Anspruch 1, wobei mindestens ein Prozessor (10) bereitgestellt ist, um Ortsinformationen für mindestens einige der zweiten Stationen (MS2) und/oder die erste Station (MS1) bereitzustellen.

3. Element eines Kommunikationsnetzwerks (MSC) nach Anspruch 2, wobei der Prozessor (10) angepasst ist, den Speicher (6) nach mindestens einer zweiten Station (MS2) zu durchsuchen, welche das angeforderte Ortskriterium aufweist.

4. Element eines Kommunikationsnetzwerks (MSC) nach einem der Ansprüche 1 bis 3, wobei das Element des Kommunikationsnetzwerks eines ist von:
einer Mobildienste-Vermittlungsstelle;
einer Basisstation; oder
einer Basisstations-Steuerung.

5. Element eines Kommunikationsnetzwerks (MSC) nach einem der vorhergehenden Ansprüche, wobei Mittel bereitgestellt sind, um zu bestimmen, welche zweiten Stationen (MS2) das Ortskriterium erfüllen.

6. Element eines Kommunikationsnetzwerks (MSC) nach Anspruch 5, wobei Mittel bereitgestellt sind, um Informationen darüber, welche der zweiten Stationen (MS2) das Ortskriterium erfüllen, an die erste Station (MS1) zu senden.

7. Element eines Kommunikationsnetzwerks (MSC) nach Anspruch 5, wobei die erste Station (MS1) Mittel umfasst, um die mindestens eine der zweiten Stationen (MS2) basierend auf den Informationen auszuwählen.

8. Element eines Kommunikationsnetzwerks (MSC) nach Anspruch 5, wobei das Bestimmungsmittel eingerichtet ist, um eine Reihenfolge zu definieren, in der Verbindungen mit zweiten Stationen (MS2), die das Ortskriterium erfüllen, versucht werden sollen.

9. Element eines Kommunikationsnetzwerks (MSC) nach Anspruch 5, wobei das Bestimmungsmittel eingerichtet ist, Verbindungen mit zweiten Stationen (MS2), die das Ortskriterium erfüllen, zufällig zu versuchen.

10. Verfahren zum Verbinden einer ersten Station (MS1) und mindestens einer von mehreren zweiten Stationen (MS2) basierend auf einer Verbindungsanforderung von der ersten Station (MS1), wobei die Verbindungsanforderung ein Ortskriterium, das von mindestens einer zweiten Station (MS2) erfüllt werden muss, und Informationen umfasst, die mindestens eine zweite Station (MS2) identifizieren, wobei das Verfahren umfasst:
Empfangen der Verbindungsanforderung;
Bestimmen, welche der zweiten Stationen (MS2) das Ortskriterium erfüllen, indem mindestens eine der zweiten Stationen (MS2) zur Verbindung ausgewählt wird, basierend auf Ortsinformationen für mindestens einige der zweiten Stationen (MS2), die in einem Speicher (6) gespeichert sind;
Aufbauen einer Verbindung zwischen der ersten Station (MS1) und der identifizierten mindestens einen zweiten Station (MS2) nur dann, falls das Ortskriterium erfüllt ist, und wobei, falls die zweite Station (MS2) das Ortskriterium zum Zeitpunkt des Ausführens der Verbindungsanforderung nicht erfüllt, Einrichten, die zweite Verbindung zu einem nachfolgendem Zeitpunkt aufzubauen, wenn die zweite Station (MS2) das Ortskriterium erfüllt.

11. Verfahren nach Anspruch 10, weiter umfassend
Anfordern einer Verbindung mit mindestens einer zweiten Station (MS2), die das Ortskriterium erfüllt; und
Aufbauen einer Verbindung zwischen der ersten Station (MS1) und der mindestens einen zweiten Station (MS2), die das Ortskriterium erfüllt.

## Revendications

1. Elément de réseau de communication (MSC) pour connecter une première station (MS1) et au moins une d'une pluralité de deuxièmes stations (MS2) sur la base d'une demande de connexion provenant de la première station (MS1), ladite demande de connexion comprenant un critère de localisation devant être satisfait par au moins une deuxième station (MS2) et des informations identifiant au moins une deuxième station (MS2) ;
ledit élément de réseau de communication (MSC) étant agencé pour être accessible à une mémoire (6) agencée pour stocker des informations de localisation pour au moins certaines desdites deuxièmes stations (MS2) ;
ledit élément de réseau de communication comprenant un moyen de sélection agencé pour sélectionner au moins une des deuxièmes stations (MS2) pour une connexion basée sur les informations de localisation stockées dans la mémoire (6) ; et
ledit élément de réseau de communication étant agencé en outre pour établir un appel entre ladite première station (MS1) et l'au moins une deuxième station identifiée (MS2) seulement si le critère de localisation est satisfait, et dans lequel, si la deuxième station (MS2) n'a pas satisfait le critère de localisation au moment où la demande de connexion est effectuée, l'élément de réseau de communication est agencé pour établir une connexion à un instant successif quand la deuxième station (MS2) satisfait le critère de localisation.

2. Elément de réseau de communication (MSC) selon la revendication 1, dans lequel au moins un processeur (10) est prédisposé pour fournir des informations de localisation pour au moins certaines desdites deuxièmes stations (MS2) et/ou de ladite première station (MS1).

3. Elément de réseau de communication (MSC) selon la revendication 2, dans lequel le processeur (10) est adapté pour chercher dans la mémoire (6) au moins une deuxième station (MS2) possédant le critère de localisation exigé.

4. Elément de réseau de communication (MSC) selon l'une quelconque des revendications 1 à 3, dans lequel l'élément de réseau de communication est l'un quelconque parmi : un centre de commutation de services mobiles, une station de base ou un contrôleur de station de base.

5. Elément de réseau de communication selon l'une quelconque des revendications précédentes, dans lequel des moyens sont prévus pour déterminer quelles deuxièmes stations (MS2) satisfont le critère de localisation.

6. Elément de réseau de communication selon la revendication 5, dans lequel des moyens sont prévus pour envoyer à la première station (MS1) des informations sur quelles deuxièmes stations (MS2) satisfont le critère de localisation.

7. Elément de réseau de communication selon la revendication 5, dans lequel la première station (MS1) comprend des moyens pour sélectionner ladite au moins une desdites deuxièmes stations (MS2) sur la base desdites informations.

8. Elément de réseau de communication selon la revendication 5, dans lequel les moyens de détermination sont agencés pour définir un ordre dans lequel des connexions à des deuxièmes stations (MS2) satisfaisant le critère de localisation doivent être tentées.

9. Elément de réseau de communication selon la revendication 5, dans lequel les moyens de détermination sont agencés pour tenter des connexions à des deuxièmes stations (MS2) satisfaisant le critère de localisation de manière aléatoire.

10. Procédé pour connecter une première station (MS1) et au moins une d'une pluralité de deuxièmes stations (MS2) sur la base d'une demande de connexion provenant de la première station (MS1), ladite demande de connexion comprenant un critère de localisation devant être satisfait par au moins une deuxième station (MS2) et des informations identifiant au moins une deuxième station (MS2), le procédé comprenant :
la réception de ladite demande de connexion; la détermination desquelles desdites deuxièmes stations (MS2) satisfont ledit critère de localisation en sélectionnant au moins une des deuxièmes stations (MS2) pour une connexion sur la base d'informations de localisation pour au moins certaines desdites deuxièmes stations (MS2) stockées dans une mémoire (6) ;
l'établissement d'une connexion entre la première station (MS1) et l'au moins une deuxième station identifiée (MS2) seulement si le critère de localisation est satisfait, et dans lequel, si la deuxième station (MS2) ne satisfait pas le critère de localisation au moment où la demande de connexion est effectuée, l'agencement pour établir la deuxième connexion à un moment successif quand la deuxième station (MS2) satisfait le critère de localisation.

11. Procédé selon la revendication 10, comprenant en outre la demande d'une connexion avec au moins une deuxième station (MS2) satisfaisant ledit critère ; et l'établissement d'une connexion entre ladite première station (MS1) et ladite au moins une deuxième station (MS2) satisfaisant ledit critère de localisation.
